# EUROPÄISCHE PATENTSCHRIFT

(11) **EP 1 410 166 B1**
(45) Veröffentlichungstag und Bekanntmachung des Hinweises auf die Patenterteilung: **08.03.2006**
(21) Anmeldenummer: 01955360.1
(22) Anmeldetag: 19.07.2001
(51) Int. Cl.: G06F 9/00, G06F 9/445, B60R 16/02

(54) **VERFAHREN ZUM LADEN VON SOFTWARE**
METHOD FOR LOADING SOFTWARE
PROCEDE DE CHARGEMENT DE LOGICIEL

(30) Priorität: 01.08.2000 DE 10037397
(43) Veröffentlichungstag der Anmeldung: 21.04.2004
(73) Patentinhaber: DaimlerChrysler AG, 70567 Stuttgart (DE)
(72) Erfinder: AMENDOLA, Sandro, 53127 Bonn (DE); AUGUSTIN, Lawrence, 89077 Ulm (DE); SCHNEIDER, Sandra, 70499 Stuttgart (DE); UNRUH, Peter, 53123 Bonn (DE)
(86) Internationale Anmeldenummer: PCT/EP2001/008355
(87) Internationale Veröffentlichungsnummer: WO 2002/010903

(56) Entgegenhaltungen:
- DE-A- 4 334 859
- DE-A- 19 620 885
- DE-A- 19 750 365
- DE-A- 19 850 133
- US-A- 5 521 588
- US-A- 5 838 251

## Beschreibung

Die Erfindung betrifft ein Verfahren zum Laden von Software in ein Zielgerät eines Fahrzeugsteuerungssystems mit mehreren Geräten, sowie ein Fahrzeugsteuerungssystem zur Durchführung des Verfahrens.

Aus der Offenlegungsschrift DE 43 34 859 A1 ist eine Einrichtung zum Programmieren von elektronischen Steuergeräten in einem Kraftfahrzeug beschrieben, die zum Initialisieren der Steuergeräte am Fertigungsband vorgesehen ist. Die Steuergeräte stehen untereinander in Verbindung. Ein Steuergerät ist mit einem externen Programmiergerät kommunikationsfähig, wobei eine vorhandene Sende-/Empfangseinrichtung des Steuergeräts, z. B. eine Infrarotschließanlage, für die Kommunikation genutzt wird.

Bei der Initialisierung von Geräten muss jedes zu programmierende Gerät ausreichend, Rechenleistung und ausreichend freien Speicher haben, um die bei der Programmierung anfallenden Aufgaben wahrnehmen zu können. Höhere Anforderungen als bei der Initialisierung gelten für das Einspielen neuer Softwareversionen, d.h. sogenannte Updates, aufgrund einer dann eventuell notwendigen Sicherung vorhandener Software und verringertem freien Speicherplatz durch Belegung mit Betriebsdaten. Diese höheren Anforderungen sind beispielsweise durch höhere Rechenleistungen und größeren Speicher von Geräten eines Fahrzeugsteuersystems zu erfüllen. Andererseits besteht bei Fahrzeugsteuerungssystemen ein erheblicher Kostendruck, so dass insbesondere für eine Serienausstattung vorgesehene Geräte möglichst kostengünstig ausgeführt werden müssen. Das Laden von Software in Fahrzeugsteuerungssysteme hat sich bisher daher auf die Initialisierung bestimmter Geräte am Fertigungsband sowie auf ein Update spezieller, meist als Sonderausstattung vorgesehener Geräte, wie Navigationssysteme, beschränkt, die über CD (Compact Disc) neue Datensätze erhalten.

Aus der Offenlegungsschrift DE 196 25 002 A1 ist ein Fahrzeugkommunikationssystem bekannt, bei dem Geräteeinheiten zum Senden, Empfangen, Erfassen und/oder Verarbeiten von Daten flexibel steuerbar verschiedenen Telematik-Applikationen zugeordnet werden können. Dadurch soll mit geringem Aufwand eine erhöhte Flexibilität bei der Durchführung von Telematik-Applikationen bereitgestellt werden, und es soll eine redundante Bestückung des Fahrzeugs mit identischen Geräten für unterschiedliche Telematik-Applikationen vermieden werden.

Die US 5 521 588 offenbart ein Verfahren zum Programmieren eines Steuergerätes in einem Verkehrsmittel. Wenn ein Steuergerät eines Datenbussystems ersetzt wird, wird der Speicherbereich des Steuergerätes mit einem Speicherbereich eine Master-Steuergerätes verglichen. Falls sich der Datensatz des neu eingesetzten Steuergerätes von dem Datensatz des Master-Steuergerätes unterscheidet, wird der Speicherbereich des neu eingesetzten Steuergerätes mit dem Datensatz des Master-Steuergerätes überschrieben.

Die US 5 838 251 offenbart ein Verfahren, um Daten in ein Steuergerät eines Verkehrsmittels zu übertragen. Dabei wird der zu übertragende Datensatz verschlüsselt und in dem Zielsteuergerät des Verkehrsmittels wieder entschlüsselt.

Der Erfindung liegt das technische Problem zugrunde, ein Verfahren zum Laden von Software in ein Zielgerät eines Fahrzeugsteuerungssystems und ein Fahrzeugsteuerungssystem zur Durchführung des Verfahrens bereitzustellen, die nur geringe Anforderungen an die Leistungsfähigkeit des Zielgeräts stellen.

Erfindungsgemäß ist hierzu ein Verfahren zum Laden von Software mit den Merkmalen von Anspruch 1 sowie ein Fahrzeugsteuerungssystem mit den Merkmalen von Anspruch 6 vorgesehen.

Indem das Laden eines Softwaremoduls in Teilaufgaben unterteilt wird und eine Durchführung der Teilaufgaben an ein Zielgerät, Geräte des Fahrzeugsteuerungssystems und/oder ein Leitgerät außerhalb des Fahrzeugsteuerungssystems zugewiesen wird, müssen nicht alle Aufgaben beim Laden des Softwaremoduls von einem einzigen Gerät wahrgenommen werden. Dadurch kann die Last, beispielsweise bezüglich Rechenleistung und Speicherkapazität, gemäß der Leistungsfähigkeit der einzelnen Geräte verteilt werden. Die meisten Geräte eines Fahrzeugsteuerungssystems sind kein Bestandteil der Serienausstattung. Durch intelligente Verteilung der Teilaufgaben kann verhindert werden, dass die wenigen Seriengeräte aufgerüstet und damit verteuert werden müssen, um ein Software-Update zu ermöglichen. Die Definition von Teilaufgaben entspricht der Definition logischer Geräte. Bei der Umsetzung des Verfahrens werden dann die Teilaufgaben oder die logischen Geräte den tatsächlich physikalisch vorhandenen Geräten zugewiesen.

Die Teilaufgaben weisen eine Kontrollgerätaufgabe, die ein Verarbeiten und Weiterleiten von Steuerbefehlen für das Laden des Softwaremoduls von außerhalb der Fahrzeugsteuerungssystems enthält, eine Updategerätaufgabe, die eine Steuerung des Ladens des Softwaremoduls zwischen dem Zielgerät, den Geräten und/oder dem Leitgerät enthält und eine Empfangsgerätaufgabe auf, die eine Bereitstellung einer Schnittstelle für das von außerhalb des Fahrzeugsteuerungssystems zu ladende Softwaremodul enthält. Ein Unterteilen in diese Teilaufgaben ist für ein Fahrzeugsteuerungssystem besonders geeignet, da es spezielle, bei einem Fahrzeugsteuerungssystem vorliegende Randbedingungen berücksichtigt. So weisen Fahrzeugsteuerungssysteme keine leistungsfähigen Zentralrechner auf, der generell die Hauptlast bei einem Ladevorgang übernehmen könnte. Vielmehr unterscheiden sich verschiedene Ausstattungsvarianten in Bezug auf die Leistungsfähigkeit der eingebauten Geräte erheblich, so dass erst eine variable Zuweisung der Teilaufgaben das Laden der Software bei verschiedenen Ausstattungsvarianten ermöglicht. Aufgrund der großen Flexibilität des Verfahrens kann dieses auch über mehrere Modellzyklen eines Herstellers angewendet werden.

Das Vorsehen einer Kontrollgerätaufgabe ermöglicht es, verschiedene Geräte als Schnittstelle zur Außenwelt zu verwenden, ohne das Verfahren zum Laden eines Softwaremoduls verändern zu müssen. So kann das Laden eines bzw. mehrerer Softwaremodule beispielsweise von einem externen Diagnosegerät oder auch von einer Eingabeeinrichtung im Fahrzeug selbst gesteuert werden. Damit kann für den Update von Steuergeräten vom Diagnoserechner aus und für den Update eines Navigationssystems vom Bediengerät im Fahrzeug aus dasselbe Verfahren zum Einsatz kommen. Die flexible Zuweisung der Durchführung der Updategerätaufgabe erlaubt es, auch wenig leistungsfähige Geräte im Fahrzeugsteuerungssystem mit neuen Softwaremodulen zu versehen, da die Steuerung des Ladens des Softwaremoduls einem leistungsfähigeren Gerät zugewiesen werden kann.

Das Vorsehen einer Empfangsgerätaufgabe erlaubt es, für ein Update verschiedener Geräte nur ein physikalisches Gerät zu verwenden. Auch kann das Verfahren unverändert angewendet werden, wenn software Staff über eine beispielsweise in der Standardausstattung vorgesehener Diagnoseschnittstelle über eine nur optional vorgesehene Mobilfunk- oder CD-Rom-Schnittstelle geladen werden soll. Bei Vorliegen unterschiedlicher Datenübertragungsraten außerhalb des Fahrzeugsteuerungssystems und im vernetzten Fahrzeugsteuerungssystem kann die Empfangsgerätaufgabe neben dem Empfangen der Daten auch eine Zwischenspeicherung der empfangenen Daten umfassen.

Vorteilhafte Ausgestaltungen der Erfindung sind in den Unteransprüchen angegeben.

Die Definition einer Konfigurationsmanageraufgabe ermöglicht es, eine rechenintensive Kompatibilitätsprüfung beim Laden eines Softwaremoduls bei Fahrzeugsteuerungssystemen mit Standardausstattung auszulagern und beispielsweise einem Diagnosegerät zu übertragen. Bei besser ausgestatteten Varianten kann dahingegen die Kompatibilitätsprüfung im Rahmen der Konfigurationsmanageraufgabe im Fahrzeug selbst durchgeführt werden, so beispielsweise beim Laden neuer Software für ein Navigationssystem durch den Kunden selbst.

Indem die Daten für das Konfigurationsmanagement in einer Versionszeile und einer Liste von Anforderungen direkt mit der Software mitgeführt werden, ist keine aufwendige zentrale Datenhaltung erforderlich. Lediglich die Auswertung der mitgeführten Daten wird von dem Gerät zentral durchgeführt, dem die Durchführung der Konfigurationsmanageraufgabe zugewiesen wurde. Damit sind für eine Kompatibilitätsprüfung lediglich so viele zentrale Anteile wie nötig vorgesehen, und das Verfahren ist dadurch in besonderer Weise für ein Fahrzeugsteuerungssystem geeignet. Es ist außerdem ein Selbsttest der Softwarekonfiguration des Fahrzeugsteuerungssystems möglich.

Das Vorsehen einer Backupgerätaufgabe, die ein Sichern wenigstens eines Teils von im Zielgerät vorhandenen Softwaremodulen innerhalb des Fahrzeugsteuerungssystems enthält, ermöglicht eine Sicherung vorhandener Software auch bei Software-Updates, die vom Kunden selbst, beispielsweise von CD-Rom ohne Verbindung mit einem externen Diagnosegerät, durchgeführt werden, aber beispielsweise auch bei einem Software-Update über Mobilfunk. Die flexible Zuweisung der Backupgerätaufgabe erlaubt es, ein je nach Ausstattungsvariante hierfür besonders geeignetes Gerät auszuwählen.

Das Zuweisen der Durchführung der Teilaufgaben erfolgt in vorteilhafter Weise in Abhängigkeit der für die Teilaufgaben erforderlichen Rechenleistung, des für die Teilaufgaben erforderlichen Speicherplatzes und/oder der im Zielgerät und in den Geräten des Fahrzeugsteuerungssystems für die Speicherung von Daten erforderlichen Zeit. Auf diese Weise können rechenintensive, speicherintensive beziehungsweise zeitkritische Teilaufgaben dem dafür jeweils geeignetsten Gerät zugewiesen werden.

Indem eine Absicherung einer Datenübertragung durch kryptographische Verschlüsselung nur außerhalb des Fahrzeugsteuerungssystems erfolgt, kann der Aufwand gegenüber einer sogenannten End-To-End-Absicherung deutlich gesenkt werden, so dass Standardausstattungen von Fahrzeugsteuerungssystemen trotz der Möglichkeit, ein Update durchzuführen, einfacher ausgeführt werden können. Insbesondere wird innerhalb des Fahrzeugsteuerungssystems weniger Rechenleistung benötigt und allgemein sinkt der Verwaltungsaufwand, da weniger kryptographische Schlüssel verwaltet werden müssen.

Das der Erfindung zugrunde liegende technische Problem wird auch durch ein Fahrzeugsteuerungssystem mit den Merkmalen von Anspruch 6 gelöst. Bei einem solchen Fahrzeugsteuerungssystem werden die für die Durchführung einer Kompatibilitätsprüfung im Rahmen einer Konfigurationsmanageraufgabe benötigten Daten mit der Software mitgeführt. Hierzu weisen die in den jeweiligen Geräten des Fahrzeugsteuerungssystems vorhandenen Softwaremodule jeweils eine Versionszeile und eine Liste von Anforderungen auf. Mit einem solchen Fahrzeugsteuerungssystem kann eine Kompatibilitätsprüfung für ein zu ladendes Softwaremodul ohne aufwendige zentrale Datenhaltung durchgeführt werden, da die erforderlichen Daten an die Softwaremodule selbst angehängt sind. Ein solches Fahrzeugsteuerungssystem ist damit besonders gut geeignet, in verschiedenen Ausstattungsvarianten, einschließlich einfacher Standardausstattungen, hergestellt zu werden.

Indem das Fahrzeugsteuerungssystem mit einem Leitgerät außerhalb des Fahrzeugsteuerungssystem betreibbar ist, kann die Konfigurationsmanageraufgabe außerhalb des Fahrzeugsteuerungssystems durchgeführt werden, wodurch die Anforderungen an die Geräte des Fahrzeugsteuerungssystems gesenkt werden.

Vorteilhaft ist aber auch, wenn im Fahrzeugsteuerungssystem ein zur Durchführung der Konfigurationsmanageraufgabe geeignetes Gerät vorgesehen ist, da dann eine Kompatibilitätsprüfung, nämlich ob das Fahrzeugsteuerungssystem die Anforderungen des zu ladenden Softwaremoduls bezüglich Hardware und Software erfüllt und ob das zu ladende Softwaremodul die Anforderungen für den Betrieb des Fahrzeugsteuerungssystems erfüllt, im Fahrzeug selbst durchgeführt werden kann. Dies ist beispielsweise bei Übertragung der Daten per Mobilfunk oder von CD-Rom vorteilhaft, wenn ein Update ohne Anschließen eines externen Geräts durchgeführt werden soll.

Weitere Merkmale und Vorteile der Erfindung ergeben sich aus der beigefügten Zeichnung im Zusammenhang mit der folgenden Beschreibung. In der Zeichnung zeigt:
- Figur 1: zeigt eine schematische Darstellung einer ersten bevorzugten Ausführungsform des erfindungsgemäßen Verfahrens und des erfindungsgemäßen Fahrzeugsteuerungssystems und
- Figur 2: eine schematische Darstellung der bei einer Weiteren bevorzugten Ausführungsform der Erfindung durchgeführten Prüfungen im Rahmen der Konfigurationsmanageraufgabe.

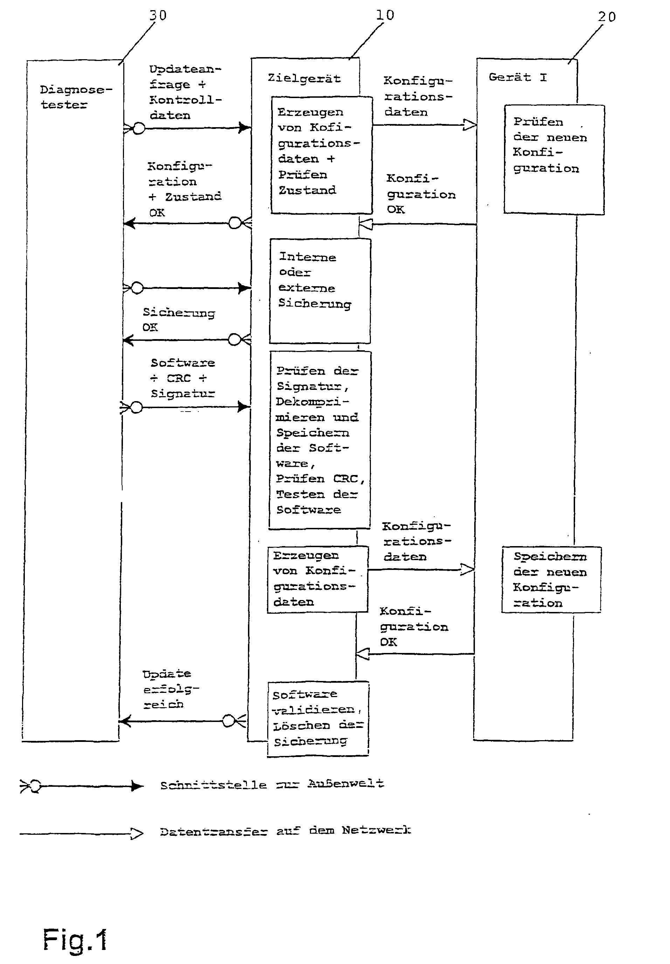

Figur 1 zeigt schematisch ein Fahrzeugsteuerungssystem gemäß einer bevorzugten Ausführungsform der Erfindung und verdeutlicht eine bevorzugte Ausführungsform des erfindungsgemäßen Verfahrens. Das Fahrzeugsteuerungssystem ist in der Figur 1 durch ein Zielgerät 10 und ein Gerät I 20 angedeutet, die miteinander vernetzt sind. Im Sinne einer übersichtlichen Darstellung sind weitere Geräte des Fahrzeugsteuerungssystems nicht dargestellt. Ein Leitgerät außerhalb der Fahrzeugsteuerungssystems ist durch einen Diagnosetester 30 dargestellt, der mit dem Fahrzeugsteuerungssystem in Verbindung steht. Bei der dargestellten Ausführungsform übernimmt der Diagnosetester 30 eine Kontrollgerätaufgabe, indem er Steuerbefehle für das Laden eines Softwaremoduls von außerhalb des Fahrzeugsteuerungssystems verarbeitet und weiterleitet.

Der Diagnosetester 30 stellt damit die Schnittstelle zur Außenwelt dar, über die ein Bediener das Laden des Softwaremoduls anstößt und Rückmeldungen über den Fortgang des Verfahrens erhält.

Das Softwaremodul soll in das Zielgerät 10 geladen werden. Das Zielgerät 10 übernimmt sowohl eine Updategerätaufgabe, indem es den Ladevorgang des Softwaremoduls zwischen dem Zielgerät 10, dem Gerät I 20 und dem Diagnosetester 30 steuert, als auch eine Empfangsgerätaufgabe, indem es eine Schnittstelle für das von außerhalb des Fahrzeugsteuerungssystems, nämlich vom Diagnosetester 30, zu ladende Softwaremodul bereitstellt sowie eine Backupgerätaufgabe, indem es im Zielgerät 10 vorhandene Softwaremodule vor dem Einspielen des neuen Softwaremoduls sichert.

Das Gerät I 20 übernimmt eine Konfigurationsmanageraufgabe, indem es überprüft, ob das Fahrzeugsteuerungssystem die Anforderungen des zu ladenden Softwaremoduls bezüglich Hardware und Software erfüllt und ob das zu ladende Softwaremodul die Anforderungen für den Betrieb des Fahrzeugsteuerungssystems erfüllt.

Damit sind im vorliegenden Fall verschiedene Teilaufgaben des Ladevorgangs verschiedenen Geräten, nämlich dem Diagnosetester 30, dem Zielgerät 10 und dem Gerät I 20 zugewiesen. Mit anderen Worten sind dem Diagnosetester 30 die Aufgaben eines Kontrollgerätes, dem Zielgerät 10 die Aufgaben eines Zielgeräts, eines Updategeräts, eines Empfangsgeräts sowie eines Backupgeräts und dem Gerät I 20 die Aufgaben eines Konfigurationsmanagers zugewiesen. Dadurch wird die Rechen-und Speicherlast des Update-Vorgangs entsprechend den Fähigkeiten der einzelnen Geräte verteilt.

Der Updatevorgang wird von dem Diagnosetester 30 mit einer Updateanfrage gestartet. Zusammen mit der Updateanfrage sendet der Diagnosetester 30 Kontrolldaten zum Zielgerät 10. Im Rahmen der Updategerätaufgabe generiert das Zielgerät 10 aus diesen Kontrolldaten und aus seinem internen Status Konfigurationsdaten für das Konfigurationsmanagement.

Diese Konfigurationsdaten werden zum Gerät I 20 gesendet, das dann im Rahmen der Konfigurationsmanageraufgabe prüft, ob die neue Konfiguration zum Gesamtsystem passt oder nicht, nämlich ob das zu ladende Softwaremodul die Anforderungen des Fahrzeugsteuerungssystems erfüllt und umgekehrt. Diese Information sendet das Gerät I 20 zum Zielgerät 10. Im dargestellten Fall wurde das Prüfen der neuen Konfiguration mit positivem Ergebnis abgeschlossen, so dass das Gerät I 20 die Information "Konfiguration OK" an das Zielgerät 10 sendet.

Das Zielgerät 10 überprüft weiter, ob sein interner Zustand ein Software-Update erlaubt und ob der für den Update-Vorgang erforderliche Speicherplatz im Zielgerät 10 vorhanden ist. Im Rahmen der Updategerätaufgabe sendet das Zielgerät 10 dann die Bestätigung "Konfiguration und Zustand OK", dass ein Update möglich ist, an den Diagnosetester 30.

Anhand der vom Diagnosetester 30 im Rahmen der Kontrollgerätaufgabe zusammen mit der Update-Anfrage übersendeten Kontrolldaten erkennt das Gerät 10, welche Teile der Software vor einem Einspielen des neuen Softwaremoduls gesichert werden müssen. Im Rahmen der Backupgerätaufgabe führt das Zielgerät 10 dann eine Sicherung der vorhandenen Software durch. Diese Sicherung kann innerhalb des Fahrzeugsteuerungssystems beispielsweise im Zielgerät 10 selbst oder durch Auslagern auf ein anderes Geräts des Fahrzeugsteuerungssystems oder extern beispielsweise durch Sicherung im Diagnosetester außerhalb des Fahrzeugsteuerungssystems erfolgen. Ausgelöst wird die Sicherung der vorhandenen Software durch eine erneute Übertragung einer Updateanfrage und eines Sicherungsbefehls vom Diagnosetester 30. Nach Abschluß der Sicherung gibt das Zielgerät 10 die Meldung "Sicherung OK" an den Diagnosetester 30 zurück.

Nach einer erfolgreichen Sicherung erhält das Zielgerät 10 im Rahmen der Updategerätaufgabe das neue Softwaremodul zusammen mit Prüfsumme, bspw. CRC, und Signatur. Das Zielgerät 10 führt eine Zwischenspeicherung des neuen Softwaremoduls durch und erfüllt dadurch eine Empfangsgerätaufgabe, indem es eine Schnittstelle zwischen dem Diagnosetester 30 außerhalb des Fahrzeugsteuerungssystems und dem Fahrzeugsteuerungssystem selbst bereitstellt. Beispielsweise kann das neue Softwaremodul vom Diagnosetester 30 zum Zielgerät 10 mit einer anderen Datenübertragungsrate als im Fahrzeugsteuerungssystem selbst, nämlich zwischen dem Zielgerät 10 und dem Gerät I 20, verwendet wird, übertragen werden. Durch Zwischenspeichern des neuen Softwaremoduls werden die ankommenden Daten gepuffert und können mit der im Fahrzeugsteuerungssystem verwendeten Datenübertragungsrate weitergegeben werden.

Im Zielgerät 10 wird das neue Softwaremodul dekomprimiert, die Signatur wird überprüft und das neue Softwaremodul wird eingespeichert. Eine Prüfsumme, bspw. CRC, wird berechnet und überprüft. Darüber hinaus wird die erfolgreiche Installation des neuen Softwaremoduls getestet.

Sind die Prüfungen der Signatur, der Prüfsumme und der Installation erfolgreich, erzeugt das Zielgerät 10 im Rahmen der Updategerätaufgabe Konfigurationsdaten und sendet diese an das Gerät I 20, das im Rahmen der Konfigurationsmanageraufgabe die neue, nun aktuelle Konfiguration speichert. Nach Speichern der Konfiguration sendet das Gerät I 20 eine Bestätigung "Konfiguration OK".

Nach Erhalt dieser Bestätigung vom Gerät I 20 gibt das Zielgerät die Installation des neuen Softwaremoduls frei. Das Zielgerät 10 kennzeichnet dazu das neue Softwaremodul als gültig und löscht die zuvor gespeicherte alte Software.

Abschließend gibt das Updategerät eine Bestätigung des erfolgreichen Software-Updates an das Kontrollgerät, im vorliegenden Fall an den Diagnosetester 30 aus. Am Diagnosetester 30 kann der erfolgreiche Abschluss des Updates dann für einen Bediener angezeigt werden.

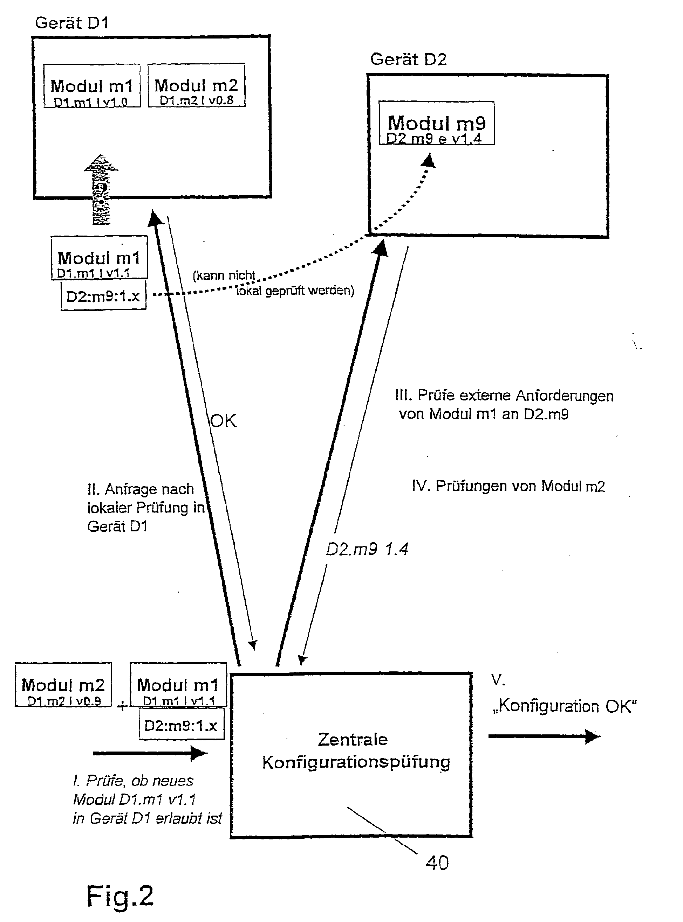

Im Folgenden wird anhand der Figur 2 ein bevorzugter Ablauf einer Konfigurationsprüfung bei einer weiteren Ausführungsform des erfindungsgemäßen Verfahrens zum Laden von Software mit einem erfindungsgemäßen Fahrzeugsteuerungssystem erläutert. Jedes Softwaremodul ist eine Einheit von Software, die ausgetauscht bzw. neu eingespielt werden kann. Jedes Softwaremodul weist eine Versionszeile auf, die die Bezeichnung des Zielgeräts, den Modulnamen, eine Kennzeichnung für lokale oder externe Verwendung und die Versionsnummer sowie optional weitere Angaben enthält. Im Fall der zu ladenden Softwaremodule m1 und m2 in der Figur 2 lautet die Bezeichnung des Zielgeräts D1, das eine Softwaremodul trägt den Namen m1, eine ausschließlich interne Verwendung ist durch den Buchstaben 1 angedeutet und das Softwaremodul m1 hat sie Version v1.1. Die Versionszeile des Softwaremoduls m1 lautet demnach D1.ml l vl.1.

Das Softwaremodul m1 führt auch eine Liste von Anforderungen an andere Softwaremodule mit sich. Die Liste von Anforderungen enthält Kennzeichnungen von Geräten, auf die ein Zugriff des zu ladenden Softwaremoduls m1 vorgesehen ist, die Bezeichnungen der in den Geräten, auf die ein Zugriff vorgesehen ist, von dem zu ladenden Softwaremodul m1 benötigten Softwaremodule, sowie Versionsnummer der benötigten Softwaremodule. Im Fall des Softwaremoduls m1 ist ein Zugriff auf ein Gerät D2 vorgesehen, in dem von dem zu ladenden Softwaremodul m1 ein Softwaremodul m9 in der Version 1.x benötigt wird. Die Liste der Anforderungen des Softwaremoduls m1 lautet demnach D2.m9 1.x.

Die in der Liste der Anforderungen enthaltenen Softwaremodule müssen in der angegebenen Version im Fahrzeugsteuerungssystem vorhanden sein. Die neu einzuspielenden Softwaremodule m1 und m2 werden in die Konfigurationsprüfung in einem Gerät 40 eingecheckt. Das Gerät 40 liegt innerhalb des Fahrzeugsteuerungssystems, die Konfigurationsprüfung könnte aber auch von einem außerhalb liegenden Gerät durchgeführt werden. Eine Kompatibilität des Softwaremoduls m1 mit dem Fahrzeugsteuerungssystem wird nun geprüft, indem in einer ersten Prüfung die Listen von Anforderungen der bereits im Fahrzeugsteuerungssystem vorhandenen Softwaremodule geprüft werden. In der Darstellung der Figur 2 ist zu erkennen, dass die Liste der Anforderungen des Softwaremoduls m2 im Gerät D1 leer ist, das Modul m2 also keine Anforderungen z.B. an das Softwaremodul m1 stellt. Das Softwaremodul m1 wird vom Gerät D1 auch nicht für eine externe Verwendung zur Verfügung gestellt, was durch den Buchstaben 1 in der Versionszeile des Moduls m1 angedeutet ist. Damit haben weitere Softwaremodule auf anderen Geräten, im dargestellten Fall also das Modul m9 auf Gerät D2, keine Anforderungen an das Softwaremodul m1.

In einer zweiten Prüfung werden dann die Anforderungen des zu ladenden Softwaremoduls m1 und m2 an die im Fahrzeugsteuerungssystem vorhandenen Softwaremodule geprüft. Hierzu wird die Liste der Anforderungen des Softwaremoduls m1 bzw. m2 herangezogen. Im Beispiel der Figur 2 benötigt das Softwaremodul m1 gemäß seiner Liste von Anforderungen auf dem Gerät D2 ein Softwaremodul m9 in einer Version 1.x, d.h. die zweite Ziffer der Versionsnummer ist beliebig. Im Rahmen der Konfigurationsmanageraufgabe vergleicht das Gerät 40 die Liste der Anforderungen des Softwaremoduls m1 mit der Versionszeile des im Gerät D2 vorhandenen Softwaremoduls x1. Die Versionszeile des Softwaremoduls xl lautet D2 m9e v1.4. In der Versionszeile ist die Bezeichnung des Softwaremoduls m9 sowie der Buchstabe e enthalten, der für eine externe Verwendung des Softwaremoduls m9 im Gerät D2 steht. Das Softwaremodul m9 liegt im Gerät D2 in der Version v1.4 vor. Ein Vergleich der Liste der Anforderungen D2.m9 1.x des Softwaremoduls m1 mit der Versionszeile m9 e v1.4 des Softwaremoduls m9 ergibt, dass die Anforderungen des Softwaremoduls m1 durch das Softwaremodul m9 erfüllt werden. Anschließend wird analog dazu m2 geprüft, auch hier werden alle Anforderungen erfüllt. Infolgedessen kann das Gerät 40 zum Abschluss der Konfigurationsprüfung eine Meldung "OK" ausgeben, dass das neue Softwaremodul m1 in das Gerät D1 eingespielt werden kann.

## Patentansprüche

1. Verfahren zum Laden von Software in ein Zielgerät eines Fahrzeugsteuerungssystems mit mehreren Geräten, welches folgende Schritte aufweist:
Unterteilen des Ladens eines oder mehrerer Softwaremodule (m1, m2) in Teilaufgaben, nämlich wenigstens eine Kontrollgerätaufgabe, eine Updategerätaufgabe und eine Empfangsgerätaufgabe, Zuweisen einer Durchführung der Teilaufgaben an mindestens zwei verschiedene Geräte aus der Gruppe Zielgerät (10; D1), Geräte (20; 40, D2) und Leitgerät (30) außerhalb des Fahrzeugsteuerungssystems, wobei die Kontrollgerätaufgabe ein Verarbeiten und Weiterleiten von Steuerbefehlen für das Laden des Softwaremoduls (m1) von außerhalb des Fahrzeugsteuerungssystems enthält, die Updategerätaufgabe eine Steuerung des Ladens des Softwaremoduls (m1) zwischen dem Zielgerät (10, D1) und dem Leitgerät (30) enthält und die Empfangsgerätaufgabe eine Bereitstellung einer Schnittstelle für das von außerhalb des Fahrzeugsteuerungssystems zu ladende Softwaremodul (m1) enthält,
**dadurch gekennzeichnet, dass** eine Konfigurationsmanageraufgabe vorgesehen ist, die eine Überprüfung enthält, ob das Fahrzeugsteuerungssystem die Anforderungen des zu ladenden Softwaremoduls (m1) bezüglich Hardware und Software erfüllt und ob das zu ladende Softwaremodul (m1) die Anforderungen für den Betrieb des Fahrzeugsteuerungssystems erfüllt, in einem jeweiligen Gerät (D1, D2) des Fahrzeugsteureungssystems vorhandene Softwaremodule (m1, m2, m9) jeweils eine Versionszeile und eine Liste von Anforderungen enthalten, die Konfigurationsmanageraufgabe von einem Gerät (20, 40) des Fahrzeugsteuerungssystems oder von dem Leitgerät (30) außerhalb des Fahrzeugsteuerungssystems durchgeführt wird.

2. Verfahren zum Laden von Software nach Anspruch 1, **dadurch gekennzeichnet , dass** die zu ladenden Softwaremodule (m1, m2) mit jeweils einer Versionszeile und einer Liste von Anforderungen versehen ist, wobei die Versionszeile eine Bezeichnung des zu ladenden Softwaremoduls (m1, m2), eine Kennzeichnung des Zielgeräts (D1), eine Kennzeichnung (1, e) für interne oder externe Verwendung des zu ladenden Softwaremoduls (m1) im Zielgerät (D1) sowie eine Versionsnummer (v1.1) des zu ladenden Softwaremoduls (m1) aufweist und die Liste der Anforderungen Kennzeichnungen von Geräten (D2), auf die ein Zugriff des zu ladenden Softwaremoduls (m1) vorgesehen ist, die Bezeichnungen der in den Geräten (D2), auf die ein Zugriff vorgesehen ist, von dem zu ladenden Softwaremodul (m1) benötigten Softwaremodule (m9) und Versionsnummern (1.x) der benötigten Softwaremodule (m9) aufweist, und die Konfigurationsmanageraufgabe eine erste Prüfung, bei der die Anforderungen von im Zielgerät (D1) und in den Geräten (D2) vorhandenen Softwaremodulen (m2, m9) an das zu ladende Softwaremodul (m1) unter Verwendung der Versionszeile des zu ladenden Softwaremoduls (m1) und Listen von Anforderungen der vorhandenen Softwaremodule (m2, m9) geprüft werden, und eine zweite Prüfung, bei der die Anforderungen des zu ladenden Softwaremoduls (m1) an die im Zielgerät (D1) und in den Geräten (D2) vorhandenen Softwaremodule unter Verwendung der Liste der Anforderungen des zu ladenden Softwaremoduls (m1) und von Versionszeilen der vorhandenen Softwaremodule (m2, m9) geprüft werden, umfasst.

3. Verfahren zum Laden von Software nach Anspruch 1 oder 2, **dadurch gekennzeichnet** durch weiteres Unterteilen des Ladens des Softwaremoduls in eine Backupgerätaufgabe, die ein Sichern wenigstens eines Teils von im Zielgerät (10; D1) vorhandenen Softwaremodulen innerhalb des Fahrzeugsteureungssystems enthält.

4. Verfahren zum Laden von Software nach einem der vorstehenden Ansprüche, **dadurch gekennzeichnet, dass** das Zuweisen der Durchführung der Teilaufgaben in Abhängigkeit der für die Teilaufgaben erforderlichen Rechenleistung, des für die Teilaufgaben erforderlichen Speicherplatzes oder der im Zielgerät (10 ; D1) und in den Geräten (20 ; 40, D2) für die Speicherung von Daten erforderlichen Zeit erfolgt.

5. Verfahren zum Laden von Software nach einem der vorstehenden Ansprüche, **dadurch gekennzeichnet , dass** eine Absicherung der beim Laden von Software übertragenen Softwaremodule (m1, m2) durch kryptographische Verschlüsselung nur ausserhalb des Fahrzeugsteuerungssystems erfolgt.

6. Fahrzeugsteuerungssystem zur Durchführung des Ladens von Software in ein Zielgerät eines Fahrzeugsteuerungssystems mit mehreren Geräten, das enthält:
ein Mittel zum Unterteilen des Ladens eines oder mehrerer Softwaremodule (m1, m2) in Teilaufgaben, nämlich wenigstens eine Kontrollgerätaufgabe, eine Updategerätaufgabe und eine Empfangsgerätaufgabe, ein Mittel zum Zuweisen einer Teilaufgaben an mindestens zwei verschiedene Geräte aus der Gruppe Zielgerät (10; D1), Geräte (20; 40, D2) und Leitgerät (30) außerhalb des Fahrzeugsteuerungssystems, wobei die Kontrollgerätaufgabe ein Verarbeiten und Weiterleiten von Steuerbefehlen für das Laden des Softwaremoduls (m1) von außerhalb des Fahrzeugsteuerungssystems enthält, die Updategerätaufgabe eine Steuerung des Ladens des Softwaremoduls (m1) zwischen dem Zielgerät (10, D1) und dem Leitgerät (30) enthält und die Empfangsgerätaufgabe eine Bereitstellung einer Schnittstelle für das von außerhalb des Fahrzeugsteuerungssystems zu ladende Softwaremodul (m1) enthält,
**dadurch gekennzeichnet, dass** eine Konfigurationsmanageraufgabe vorgesehen ist, die eine Überprüfung enthält, ob das Fahrzeugsteuerungssystem die Anforderungen des zu ladenden Softwaremoduls (m1) bezüglich Hardware und Software erfüllt und ob das zu ladende Softwaremodul (m1) die Anforderungen für den Betrieb des Fahrzeugsteuerungssystems erfüllt, in einem jeweiligen Gerät (D1, D2) des Fahrzeugsteureungssystems vorhandene Softwaremodule (m1, m2, m9) jeweils eine Versionszeile und eine Liste von Anforderungen enthalten, wobei die Konfigurationsaufgabe von einem Gerät (20, 40) des Fahrzeugsteuerungssystems oder von dem Leitgerät (30) außerhalb des Fahrzeugsteuerungssystems durchgeführt wird.

7. Fahrzeugsteuerungssystem nach Anspruch 6,
**dadurch gekennzeichnet, dass** das Fahrzeugsteuerungssystem mit einem Leitgerät ausserhalb des Fahrzeugsteuerungssystems zur Durchführung der Konfigurationsmanageraufgabe betreibbar ist.

8. Fahrzeugsteuerungssystem nach Anspruch 6 oder 7,
**dadurch gekennzeichnet, dass** im Fahrzeugsteuerungssystem ein zur Durchführung der Konfigurationsmanageraufgabe geeignetes Gerät (20 ; 40) vorgesehen ist.

## Claims

1. Method for loading software into a target unit of a vehicle control system with a plurality of component units, the said method comprising the following steps:
the loading of one or more software modules (m1, m2) is divided into component tasks, namely at least one control unit task, an updating unit task and a receiver unit task, the performance of the said component tasks is assigned to at least two different units among the group comprising the target unit (10; D1), other units (20; 40, D2) and a piloting unit (30) outside the vehicle control system, such that the control unit task comprises the processing and passing on of control commands for the loading of the software module (m1) from outside the vehicle control system, the updating task comprises control of the loading of the software module (m1) between the target unit (10; D1) and the piloting unit (30), and the receiver unit task comprises the provision of an interface for the software module (m1) to be loaded from outside the vehicle control system,
**characterised in that**
a configuration manager task is provided, which comprises a test of whether the vehicle control system satisfies the requirements of the software module (m1) to be loaded in relation to hardware and software, and whether the software module (m1) to be loaded satisfies the requirements for the operation of the vehicle control system, the software modules (m1, m2, m9) present in respective units (D1, D2) of the vehicle control system each containing a version line and a requirements list, and the configuration manager task being carried out by a unit (20, 40) of the vehicle control system or by the piloting unit (30) outside the vehicle control system.

2. Method for the loading of software according to Claim 1,
**characterised in that**
the software modules (m1, m2) to be loaded are in each case provided with a version line and a requirements list, such that the version line comprises a designation of the software module (m1, m2) to be loaded, an indication of the target unit (D1), an indication (l, e) of whether the software module (m1) in the target unit (D1) is for internal or external use, and a version number (v1.1) of the software module (m1) to be loaded, and the requirements list comprises indications of units (D2) to which access of the software module (m1) to be loaded is provided, the designations of the software modules (m9) required by the software module (m1) to be loaded, and version numbers (1.x) of the said software modules (m9), and the configuration manager task comprises a first test, in which the requirements of the software modules (m2, m9) present in the target unit (D1) and in the other units (D2) relating to the software module (m1) to be loaded are checked using the version line of the software module (m1) and the requirements lists of the software modules (m2, m9) present, and a second test in which the requirements of the software module (m1) to be loaded relating to the software modules present in the units (D2) are checked using the requirements list of the software module (m1) to be loaded and the version lines of the software modules (m2, m9) present.

3. Method for the loading of software according to Claims 1 or 2,
**characterised in that**
the loading of the software module is further divided into a backup unit task, which comprises the protection of at least part of the software modules present in the target unit (10; D1) within the vehicle control system.

4. Method for the loading of software according to any of the preceding claims,
**characterised in that**
the performance of the component tasks is assigned in accordance with the computing power required for the said component tasks, the memory capacity required for the said component tasks, or the time required in the target unit (10; D1) and in the other units (20; 40, D2) for the saving of data.

5. Method for the loading of software according to any of the preceding claims,
**characterised in that**
the software modules (m1, m2) transferred during the loading of software are protected by cryptographic encoding, which takes place only outside the vehicle control system.

6. Vehicle control system for loading software into a target unit of a vehicle control system with a plurality of units, which comprises:
means for dividing the loading of one or more software modules (m1, m2) into component tasks, namely at least one control unit task, an updating unit task and a receiver unit task, and means for assigning a particular task to at least two different units among the group comprising the target unit (10; D1), other units (20; 40, D2) and a piloting unit (30) outside the vehicle control system, such that the control unit task comprises the processing and passing on of control commands for the loading of the software module (m1) from outside the vehicle control system, the updating unit task comprises the control of the loading of the software module (m1) between the target unit (10; D1) and the piloting unit (30), and the receiver unit task comprises the provision of an interface for the software module (m1) to be loaded from outside the vehicle control system,
**characterised in that**
a configuration manager task is provided, which comprises a test of whether the vehicle control system satisfies the requirements of the software module (m1) to be loaded in relation to hardware and software, and whether the software module (m1) to be loaded satisfies the requirements for the operation of the vehicle control system, the software modules (m1, m2, m9) present in respective units (D1, D2) of the vehicle control system each containing a version line and a requirements list, and the configuration manager task being carried out by a unit (20, 40) of the vehicle control system or by the piloting unit (30) outside the vehicle control system.

7. Vehicle control system according to Claim 6,
**characterised in that**
the vehicle control system can be operated by a piloting unit outside the vehicle control system for performing the configuration manager task.

8. Vehicle control system according to Claims 6 or 7,
**characterised in that**
a unit (20; 40) suitable for carrying out the configuration manager task is provided in the vehicle control system.

## Revendications

1. Procédé pour le chargement de logiciel dans un appareil de cible d'un système de commande de véhicule avec plusieurs appareils, qui présente les étapes suivantes :
subdivision du chargement d'un ou de plusieurs modules de logiciel (m1, m2) en fonctions partielles, c'est-à-dire au moins une fonction d'appareil de contrôle, une fonction d'appareil de mise à jour et une fonction d'appareil de réception, attribution d'une exécution de fonctions partielles à au moins deux appareils différents provenant du groupe appareil cible (10 ; D1), appareil (20 ; 40, D2) et appareil directeur(30) à l'extérieur du système de commande de véhicule, la fonction d'appareil de contrôle contenant un traitement et une transmission d'instructions de commande pour le chargement du module de logiciel (m1) à partir de l'extérieur du système de commande de véhicule, la fonction d'appareil de mise à jour contenant une commande du chargement du module de logiciel (m1) entre l'appareil cible (10, D1) et l'appareil directeur (30) et la fonction d'appareil de réception contenant une mise à disposition d'une interface pour le module de logiciel (m1) à charger à partir de l'extérieur du système de commande de véhicule,
**caractérisé en ce qu'**il est prévu une fonction de gestionnaire de configuration qui contient un contrôle pour savoir si le système de commande de véhicule remplit les exigences du module de logiciel (m1) à charger en ce qui concerne le hardware et le software et si le module de logiciel (m1) à charger remplit les exigences pour le fonctionnement du système de commande de véhicule, des modules de logiciel (m1, m2, m9) présents dans un appareil (D1, D2) respectif du système de commande de véhicule contenant chacun une ligne de version et une liste d'exigences, la fonction de gestionnaire de configuration étant exécutée par un appareil (20, 40) du système de commande de véhicule ou par l'appareil directeur (30) à l'extérieur du système de commande de véhicule.

2. Procédé pour le chargement de logiciel selon la revendication 1, **caractérisé en ce que** les modules de logiciel (m1, m2) à charger sont pourvus chacun d'une ligne de version et d'une liste d'exigences, la ligne de version présentant une désignation du module de logiciel (m1, m2) à charger, une identification de l'appareil cible (D1), une identification (1, e) pour une utilisation interne ou externe du module de logiciel (m1) à charger dans l'appareil cible (D1) et un numéro de version (v1. 1) du module de logiciel (m1) à charger et la liste des exigences présentant des identifications d'appareils (D2), pour lesquels il est prévu un accès du module de logiciel (m1) à charger, les désignations des modules de logiciel (m9) et numéros de version (1. x), utilisés dans les appareils (D2), et la fonction de gestionnaire de configuration comprenant un premier test, lors duquel les exigences de modules de logiciel (m2, m9) présents dans l'appareil cible (D1) et dans les appareils (D2), imposées au module de logiciel (m1) à charger, sont testées en utilisant la ligne de version du module de logiciel (m1) à charger et les listes d'exigences des présents modules de logiciel (m2, m9), et un second test, lors duquel les exigences du module de logiciel (m1) à charger imposées au module de logiciel présent dans l'appareil cible (D1) et dans les appareils (D2) sont testées en utilisant la liste des exigences du module de logiciel (m1) à charger et de lignes de version des présents modules de logiciel (m2, m9).

3. Procédé pour le chargement de logiciel selon la revendication 1 ou 2,**caractérisé par** une nouvelle subdivision du chargement du module de logiciel en une fonction de sauvegarde de sécurité, qui contient une sauvegarde d'au moins une partie de modules de logiciel présents dans l'appareil cible (10 ; D1) à l'intérieur du système de commande de véhicule.

4. Procédé pour le chargement de logiciel selon l'une quelconque des revendications précédentes, **caractérisé en ce que** l'attribution de la réalisation des fonctions partielles s'effectue en fonction de la puissance de calcul nécessaire pour les fonctions partielles, de l'emplacement de mémoire nécessaire pour les fonctions partielles ou du temps nécessaire pour le stockage de données dans l'appareil cible (10, D1) et dans les appareils (20 ; 40, D2).

5. Procédé pour le chargement de logiciel selon l'une quelconque des revendications précédentes, **caractérisé en ce qu'**une protection des modules de logiciel (m1, m2) transmis lors du chargement de logiciel s'effectue par codage cryptographique seulement à l'extérieur du système de commande de véhicule.

6. Système de commande de véhicule pour l'exécution du chargement de logiciel dans un appareil cible d'un système de commande de véhicule avec plusieurs appareils, qui contient :
un moyen pour la subdivision du chargement d'un ou de plusieurs modules de logiciel (m1, m2) en fonctions partielles, à savoir au moins une fonction d'appareil de contrôle, une fonction d'appareil de mise à jour et une fonction d'appareil de réception, un moyen pour l'attribution d'une fonction partielle à au moins deux appareils différents provenant du groupe appareil cible (10 ; D1), appareils (20 ; 40, D2) et appareil directeur (30) à l'extérieur du système de commande de véhicule, la fonction de l'appareil de contrôle contenant un traitement et une transmission d'instructions de commande pour le chargement du module de logiciel (m1) à partir de l'extérieur du système de commande de véhicule, la fonction d'appareil de mise à jour contenant une commande du chargement du module de logiciel (m1) entre l'appareil cible (10, D1) et l'appareil directeur (30) et la fonction d'appareil de réception contenant une mise à disposition d'une interface pour le module de logiciel (m1) à charger à partir de l'extérieur du système de commande de véhicule, **caractérisé en ce que** ce qu'il est prévu une fonction de gestionnaire de configuration qui contient un contrôle pour savoir si le système de commande de véhicule remplit les exigences du module de logiciel (m1) à charger en ce qui concerne le hardware et le software et si le module de logiciel (m1) à charger remplit les exigences pour le fonctionnement du système de commande de véhicule, des modules de logiciel (m1, m2, m9) présents dans un appareil (D1, D2) respectif du système de commande de véhicule contenant chacun une ligne de version et une liste d'exigences, la fonction de configuration étant effectuée par un appareil (20, 40) du système de commande de véhicule ou par l'appareil directeur (30) à l'extérieur du système de commande de véhicule.

7. Système de commande de véhicule selon la revendication 6, **caractérisé en ce que** le système de commande de véhicule peut être exploité avec un appareil directeur à l'extérieur du système de commande de véhicule pour l'exécution de la fonction de gestionnaire de configuration.

8. Système de commande de véhicule selon la revendication 6 ou 7, **caractérisé en ce qu'**un appareil (20 ; 40) approprié pour l'exécution d'une fonction de gestionnaire de configuration est prévu dans le système de commande de véhicule.
